**Europäisches Patentamt**

**European Patent Office**

**Office européen des brevets**

(19)

(11) Veröffentlichungsnummer : **0 360 877 B1**

## (12) EUROPÄISCHE PATENTSCHRIFT

(45) Veröffentlichungstag der Patentschrift :
**07.12.94 Patentblatt 94/49**

(51) Int. Cl.⁵ : **H04B 10/08**

(21) Anmeldenummer : **88115133.6**

(22) Anmeldetag : **15.09.88**

(54) **Schaltungsanordnung zur Ermittlung einer empfangenen Lichtleistung.**

(43) Veröffentlichungstag der Anmeldung :
**04.04.90 Patentblatt 90/14**

(45) Bekanntmachung des Hinweises auf die
Patenterteilung :
**07.12.94 Patentblatt 94/49**

(84) Benannte Vertragsstaaten :
**AT BE CH DE FR GB IT LI NL SE**

(56) Entgegenhaltungen :
**EP-A- 0 282 801**
**FR-A- 2 510 267**
**US-A- 2 862 109**

(73) Patentinhaber : **SIEMENS**
**AKTIENGESELLSCHAFT**
**Wittelsbacherplatz 2**
**D-80333 München (DE)**

(72) Erfinder : **Prasse, Karl-Heinz, Dipl.-Ing.**
**Am oberen Rain 14**
**D-8102 Mittenwald (DE)**

## Beschreibung

Die Erfindung bezieht sich auf eine Schaltungsanordnung zur Ermittlung einer Lichtleistung.

Aus E. Braun und B. Stummer: "Digitalsignalübertragung auf Lichtwellenleitern im Fernnetz", Telcom Report 10 (1987) Spezial "Multiplex- und Leitungseinrichtungen", Seiten 94 bis 98 sind bereits Einrichtungen zur Digitalsignalübertragung auf Lichtwellenleiterkabeln bekannt, die Leitungsendgeräte und Zwischenregeneratoren mit optischen Sendern und optischen Empfängern enthalten.

Aus der am 21.09.88 veröffentlichten EP-A-O 282 801 ist eine Regelung des Multiplikationsfaktors von Lawinen-Photodioden in optischen Empfängern beschrieben. Da der Multiplikationsfaktor von der Vorspannung der Lawinen-Photodiode abhängt, erfolgt eine Regelung des Multiplikationsfaktors über eine Vorspannungs- bzw. Vorstromregelung. Dem Vorstrom bzw. der Vorspannung wird ein niederfrequentes Signal geringer Amplitude überlagert und dessen Dämpfung durch die Lawinen-Photodiode festgestellt und mit einem Normwert verglichen. Abweichungen vom Normwert äußern sich in einem mehr oder weniger großen Vergleichssignal, das zur Nachregelung des Vorstroms bzw. der Vorspannung dient.

Bei derartigen optischen Nachrichtenübertragungssystemen, insbesondere bei solchen mit großer Dynamik, ist es wünschenswert, die optische Empfangsleistung zu messen.

Aufgabe der Erfindung ist es daher, am optischen Empfänger einen Anschluß, insbesondere eine Meßbuchse zur Verfügung zu stellen, an der vorzugsweise mit Hilfe eines einfachen Voltmeters die gerade verfügbare Lichtleistung gemessen werden kann.

Man kann bei einem optischen Empfänger mit einer APD (Avalanche Photo Diode bzw. Lawinen-Fotodiode), der eine Regeleinrichtung zur Regelung der Vorspannung der APD enthält, die Vorspannung der APD zur Anzeige der empfangenen Lichtleistung heranziehen. Da diese Kennlinie starke Unterschiede hinsichtlich der Steigung aufweist, müßte sie dabei durch Segmentbildung linearisiert werden. Weiterhin zeigt diese Kennlinie eine sehr große Steigung bei großen Vervielfachungsfaktoren. Dadurch wird es nahezu unmöglich, bei kleinen Lichtleistungen die geforderte Genauigkeit der Lichtleistungsanzeige zu erreichen. Außerdem eignet sich die Auswertung dieser Kennlinie nicht ohne weiteres zur Anzeige des Zustandes "kein Licht".

Gemäß der Erfinaung wird die Schaltungsanordnung der eingangs genannte Art zur Lösung der gestellten Aufgabe in der im Patentanspruch 1 angegebenen Weise ausgebildet. Dabei wird die Änderung der Vorspannung der Fotodiode gemessen. Der Messung liegt somit nicht die Kennlinie der Fotodiode selbst, sondern der Differentialquotient der Kennlinie zugrunde. Durch die Auswertung des Differentialquotienten wird die Anzeige nahezu unabhängig vom Signal-Rauschabstand und kann deshalb in vorteilhafter Weise auch zur Anzeige des Zustandes "kein Licht" bzw. zur Anzeige von sehr kleinen Lichtleistungen dienen. Die Schaltungsanordnung ist für unterschiedliche Typen von Fotodioden, insbesondere für Germanium-APD oder SAM-APD (quaternäre) APD gleichermaßen geeignet. Insbesondere ist die Schaltungsanordnung in der Lage, den an der APD eingestellten Vervielfachungsfaktor M zu bewerten.

Bei der Weiterbildung der Erfindung nach Anspruch 2 ist der Logarithmus des Differenzialquotienten der Kennlinie maßgebend, so daß sich ein logarithmischer Zusammenhang zwischen der Anzeigespannung und der Lichtleistung ergibt.

Für die nach Anspruch 1 vorgesehene Modulation des Diodenstromes mit einem niederfrequenten Strom gibt es verschiedene Möglichkeiten.

Bei der Ausführungsform nach Anspruch 3 dient als Modulator ein in Serie zur Fotodiode angeordneter Stromaddierer, der dem Diodenstrom einen eingeprägten Strom vergleichsweise niedriger Frequenz überlagert.

Besitzt der optische Empfänger eine Regelvorrichtung, die den Diodenstrom in einem durch die Grenzfrequenz des geschlossenen Regelkreises vorgegebenen Frequenzbereich konstant hält, so läßt sich die Modulation des Diodenstromes zweckmäßigerweise mit den Maßnahmen nach Anspruch 4 erzielen.

Ist die Fotodiode eine APD, so ist die Ausgestaltung der Erfindung nach Anspruch 5 von Vorteil.

Für den Fall, daß eine APD Verwendung findet, können sich ferner mit Rücksicht auf der Schaltungsanordnung nachfolgende Regelschaltungen, insbesondere solche zur Verstärkungsregelung, die in Anspruch 6 angegebenen Maßnahmen als zweckmäßig erweisen. Dabei ergibt sich, daß die nachfolgenden Regelschaltungen nicht gestört und Begrenzungseffekte von der Meßschaltung fern gehalten werden.

Nach Anspruch 7 dient als Gleichrichteranordnung zur Ermittlung der niederfrequenten Vorspannungsänderung ein Synchrongleichrichter.

Die Maßnahmen nach Anspruch 8 sehen für drei Meßbereiche jeweils eine optimale Art der Messung vor.

Sollen auch vergleichsweise hohe Lichtleistungen zur Anzeige gebracht werden, so ist die Weiterbildung der Erfindung nach Anspruch 9, die eine doppelte Ausnutzung des Logarithmierers gestattet, von Vorteil.

Der nach Anspruch 10 vorgesehene Impedanzwandler gewährleistet, daß die Impedanzverhältnisse aus der Fotodiode durch die Meßanordnung praktisch nicht verändert werden.

Die Erfindung wird anhand der in den Figuren 1 bis 3 dargestellten Ausführungsbeispiele und der Kennlinie nach Figur 4 näher erläutert.

Es zeigen

Fig. 1       eine Schaltungsanordnung mit einem in Serie zu einer Fotodiode angeordneten Stromaddierer zur Überlagerung einer niederfrequenten Spannung,

Fig. 2       eine Schaltungsanordnung mit Fotodiode, bei der dem Sollwert eines Reglers eine niederfrequente Spannung überlagert wird,

Fig. 3       weitere Einzelheiten der Schaltungsanordnung nach Figur 2 und

Fig. 4       eine Kennlinie einer Fotodiode

Die in der folgenden Betrachtung vorkommenden Variablen und Konstanten bedeuten

$I_D$      Strom in der Fotodiode

$I_S$      primärer Fotostrom

a      Konstante

b      Umsetzfaktor Lichtleistung/Fotostrom

$P_L$      Einfallende Lichtleistung

M      Multiplikationsfaktor der Fotodiode

$U_{Br}$      Durchbruchspannung der Fotodiode

U      Spannung an der Fotodiode

$U_a$      Anzeigespannung

Bei den in den Figuren gezeigten Schaltungsanordnungen wird dem Strom $I_D$ der als Empfangsdiode dienenden Fotodiode 6 ein niederfrequenter Strom $I_{NF}$ konstanter Amplitude überlagert. Die daraus resultierende Änderung der Vorspannung U, die an der Kathode der Fotodiode 6 liegt, wird gemessen, mit Hilfe der Gleichrichtervorrichtung 9 gleichgerichtet, im Logarithmierer 3 logarithmiert und mit Hilfe eines an den Meßanschluß M angeschlossenen linearen Voltmeters gemessen.

Zwischen dem Strom $I_D$, der Vorspannung U und der Lichtleistung $P_L$ besteht folgender Zusammenhang:

$$P_L = b \cdot I_S$$

$$I_D = M \cdot I_S = \frac{IS}{1 - (\frac{U}{U_{Br}})^a}$$

Dabei sind a und b Konstanten.

Aufgelöst nach U ergibt sich

$$U = U_{Br} (1 - \frac{I_S}{I_D})^{1/a}$$

Als Differenzialquotient ergibt sich

$$\frac{dU}{dI_D} = \frac{U_{Br}}{I_D^2 a} \frac{I_S}{(1 - I_S/I_D)^{1 - 1/a}} = \frac{U_{Br}}{I_D^2 ab} \frac{P_L}{(1 - P_L/bI_D)^{1 - 1/a}}$$

Mit Hilfe empirischer Näherungsverfahren kann diese Gleichung in die folgende Abhängigkeit umgewandelt werden.

$$\frac{dU}{dI_D} = \frac{U_{Br}}{I_D^2} C (P_L)^d$$

Logarithmiert man die Spannung dU, so erhält man einen linearen Zusammenhang zwischen der Lichtleistung in dB und der Anzeigespannung $U_a$.

Wird der Multiplikationsfaktor M der APD so geregelt, daß das Produkt $M \cdot I_S = I_D$ konstant gehalten wird, so kann die Anzeigespannung $U_a$ damit, wenn man ein konstantes $\Delta I$ einprägt, folgendermaßen angegeben werden:

$$U_a = \log (U_{Br} \cdot C) + \log P_L = K + \log P_L$$

Durch einen einfachen Abgleich kann die exemplarabhängige Konstante K in der Anzeige berücksichtigt werden. Die Temperaturabhängigkeit dieser Konstante führt zu vernachlässigbaren Anzeigefehlern.

$$U_{Br} = U_{Br \, 25°C} (1 + \varepsilon\Delta T) \text{ mit } \varepsilon = 0{,}15\%/°C$$

Es ergibt sich bei $\Delta T = 70°$ (-10°C bis +60°C) eine Änderung der Durchbruchsspannung um 10% und damit eine Fehlanzeige von <1dB.

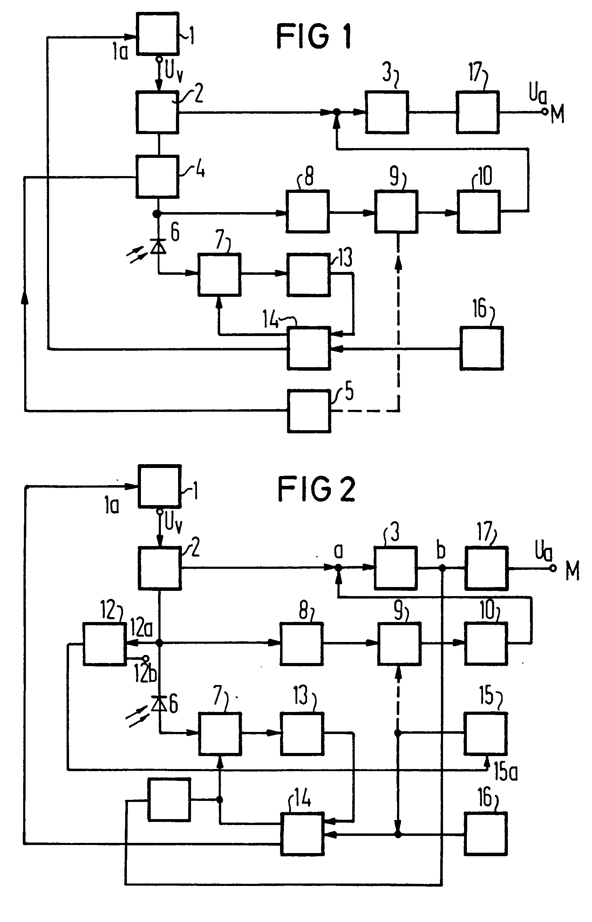

Fig. 1 zeigt eine Schaltungsanordnung zur Ermittlung der Lichtleistung, die von der Fotodiode 6 empfangen wird. Die Fotodiode 6 liegt am Eingang des Hochfrequenzverstärkers 7, der einem elektrooptischen Empfänger angehört. Die Vorspannung U der Fotodiode 6 wird von der Vorrichtung 1 zur Vorspannungserzeugung geliefert. Die Vorrichtung 1 gehört zu einer Regelvorrichtung, die die Vorspannung der Fotodiode 6 in Abhängigkeit von der Lichtleistung regelt, die die Fotodiode 6 empfängt. Auf diese Weise wird der Spitzenwert des hochfrequenten Nutzsignalstromes auf einen konstanten Wert geregelt. Die Regelvorrichtung enthält den an den Ausgang des Hochfrequenzverstärkers 7 angeschlossenen Spitzenwertgleichrichter 13 und den Regler 14. Der Regler 14 ist mit seinem Istwerteingang an den Ausgang des Spitzenwertgleichrichters 13 und mit seinem Sollwerteingang an den Sollwertgeber 16 angeschlossen. Der Ausgang des Reglers 14 ist an den Steuereingang 1a der Vorrichtung 1 zur Vorspannungserzeugung geführt.

Auf diese Weise wird das Produkt $M \cdot I_S = I_D$ konstant gehalten.

Gegebenenfalls können bereits vorhandene Schaltungen zur Modulation benutzt werden.

Zwischen dem Ausgang der Vorrichtung 1 zur Vorspannungserzeugung und der Fotodiode 6 liegt eine Serienschaltung aus der Vorrichtung 2 zur Strommessung und dem Stromaddierer 4. Der Stromaddierer 4, der an den Ausgang des Niederfrequenzgenerators 5 angeschlossen ist, fügt dem hochfrequenten Nutzsignalstrom einen niederfrequenten Strom konstanter Amplitude hinzu. Die Amplitude des niederfrequenten Stromes ist so klein gewählt, daß das Nutzsignal-/Geräuschverhältnis bzw. eine Bitfehlerrate praktisch nicht verschlechtert wird.

An die die Vorspannung führende Kathode der Fotodiode 6 ist der Impedanzwandler 8 angeschlossen, dessen Ausgang an den Eingang der Gleichrichteranordnung 9 geführt ist. Dem Ausgang der Gleichrichteranordnung 9 ist der Spannungs-/Stromwandler 10 nachgeschaltet. Die Ausgänge der Vorrichtung 2 zur Strommessung und der Ausgang des Spannungs-/Stromwandlers 10 sind gemeinsam an den Eingang 3 des Logarithmierers 3 geführt. Der Ausgang M der Schaltungsanordnung liegt am Ausgang des dem Logarithmierer 3 nachgeschalteten Strom-/Spannungswandlers 17.

Die zu messende niederfrequente Differenzspannung dU, die aus der Überlagerung des niederfrequenten Stromes resultiert, wird in der Gleichrichtervorrichtung 9, die vorzugsweise ein Synchrongleichrichter bzw. Multiplizierer ist, gleichgerichtet.

Für den insbesondere vorgesehenen Fall, daß die Gleichrichteranordnung 9 durch einen Synchrongleichrichter gebildet ist, ist ein zusätzlicher Eingang der Gleichrichtervorrichtung 9, dem das niederfrequente Hilfssignal zugeführt wird, an den Niederfrequenzgenerator 5 angeschlossen. Diese Ausführungsform ist durch eine strichlierte Verbindung der Gleichrichtervorrichtung 9 mit dem Niederfrequenzgenerator 5 dargestellt.

Um nachfolgende Regelschaltungen nicht zu stören und Begrenzungseffekte von der Meßschaltung fernzuhalten, wird die Modulation zweckmäßigerweise unterhalb eines einstellbaren Multiplikationsfaktors M, beispielsweise für Werte M<1,1, abgeschaltet. Als nachfolgende Regelschaltungen sind insbesondere Regelschaltungen zu berücksichtigen, die im Hochfrequenzverstärker 7, insbesondere zur Verstärkungsregelung vorgesehen sind. Zur Anzeige höherer Lichtleistungen wird ab einem Multiplikationsfaktor M = 1 mit Hilfe der Vorrichtung 2 zur Strommessung direkt der Diodenstrom $I_D$ gemessen. Da dieser Strom mehrere Dekaden umfaßt, wird der logarithmierte Wert dieses Stromes zur Anzeige gebracht. Der dazu nötige Strom-Logarithmierer wird dadurch doppelt ausgenutzt, daß die Vorspannungsänderung dU mit Hilfe des Spannungs-/Stromwandlers 10 in einen entsprechenden Strom umgewandelt und dem Strom-Logarithmierer 3 zugeführt wird.

Ein geeigneter Logarithmierer, der den Logarithmus seines Eingangsstromes bildet, ist z. B. aus dem Buch von J.G. Graeme, G.E. Tobey und L.P, Huelsman "Operational Amplifiers, Design und Applications", Mc GRAW-HILL BOOK COMPANY, 1971, Seiten 26 bis 263 bekannt.

Die in Figur 2 gezeigte Schaltungsanordnung stimmt mit der nach Figur 1 weitgehend überein. Abweichend wird der vom Sollwertgeber 16 gelieferten Sollspannung die Ausgangsspannung des Niederfrequenzgenerators 15 überlagert. Die Frequenz des Niederfrequenzgenerators 15 ist so gewählt, daß sie unterhalb der Reglergrenzfrequenz liegt. Die entstehende Vorspannungsänderung kann daher nicht durch die Regelung unterdrückt werden. Auf diese Weise ergibt sich eine Überlagerung des niederfrequenten Stromes $I_D$ in einfacher Weise dadurch, daß zum Sollwert der Regelspannung eine niederfrequente Spannung addiert wird. Der Vorteil eines solchen Verfahrens liegt darin, daß man nicht auf der Hochspannungsseite der Fotodiode eingreifen muß.

Abweichend von Figur 1 ist der Stromaddierer 4 daher durch eine Durchverbindung ersetzt.

Zusätzlich ist der Vergleicher 12 vorgesehen. Dieser Vergleicher 12 ist zusammen mit dem Impedanzwandler 8 an die Kathode der Fotodiode 6 angeschlossen. Der Vergleicher 12 vergleicht die an der Fotodiode 6 liegende Spannung mit einer dem Eingang 12b zugeführten Abschaltspannung und ist mit seinem Ausgang an den Steuereingang 15a des Niederfrequenzgenerators 15 geführt.

Für Werte des Multiplikationsfaktors M > 1 ist die Vorrichtung 2 zur Strommessung nicht geeignet, da der Dunkelstrom, der in der Größenordnung des Fotostromes liegt, multipliziert wird. Wird der Multiplikationsfaktor M > 1, so schaltet der Vergleicher 12 den Niederfrequenzgenerator 15 ein.

Bei den Schaltungsanordnungen nach Figur 1 und 2 wird jeweils das Produkt $M \cdot I_S = I_P$ konstant gehalten.

Bei den Schaltungsanordnungen, die nicht das Produkt $M \cdot I_S = I_D$ konstant halten, sondern einen bei jeder Lichtleistung optimalen Multiplikationsfaktor M einstellen, können ebenfalls entstehende Anzeigefehler vernachlässigt werden. Insbesondere kann dort die Anzeigespannung in sehr einfacher Weise aus der Regelschaltung gewonnen werden.

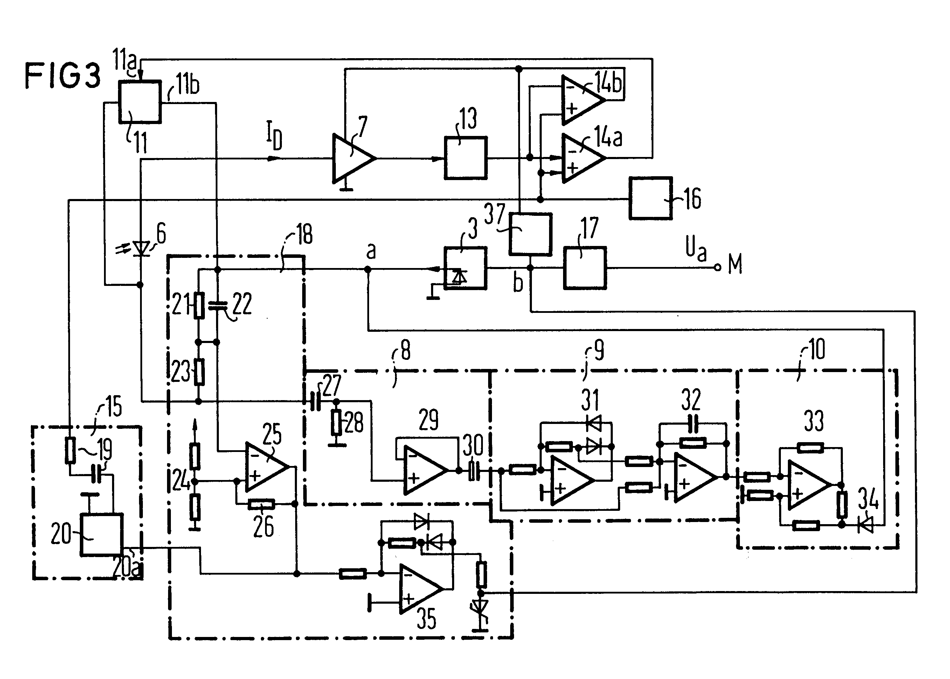

Die in Figur 3 gezeigte Schaltungsanordnung stimmt weitgehend mit der nach Figur 2 überein und zeigt weitere Einzelheiten. Der Strom $I_D$ fließt von der Vorrichtung 11 zur Vorspannungserzeugung über die Fotodiode 6 und den Eingangswiderstand des Hochfrequenzverstärkers 7 nach Masse und von dort über eine am Eingang des Logarithmierers 3 liegende Diode zum Anschluß 11b der Einrichtung 11 zurück. Der Anschluß 11b der Vorrichtung 11 liegt auf einem weiteren Bezugspotential. Zwischen dem die Vorspannung führenden Anschluß der Vorrichtung 11 und dem Anschluß llb liegt der aus den Widerständen 21 und 23 bestehende Spannungsteiler. Der durch diesen Spannungsteiler fließende Strom kann daher die Messung des Stromes $I_D$ durch den Logarithmierer 3 nicht beeinflussen.

Die Abschaltevorrichtung 18 enthält den aus den Widerständen 21 und 23 bestehenden in Serie zur Fotodiode 6 angeordneten und vom Diodenstrom durchflossenen Spannungsteiler. Parallel zum Widerstand 21, der auf der Fotodiode 6 abgewandten Seite des Spannungsteilers angeordnet ist, liegt der Kondensator 22. Am Spannungsteiler liegt die Vorspannung der Fotodiode 6. Der Widerstand 21 ist als Abgleichwiderstand ausgebildet, so daß sich das Teilerverhältnis einstellen läßt. Der Abgriff des Spannungsteilers ist an den Minuseingang des Operationsverstärkers 25 geführt, dessen Pluseingang am Abgriff des weiteren Spannungsteilers 24 liegt, der an eine Sollspannung angeschlossen ist. Der Ausgang des Vergleichers 25 , der mit Hilfe des Widerstands 26 zu einem Schmitt-Trigger ergänzt ist, ist an den Steuereingang 20a des im Niederfrequenzgenerators 15 enthaltenen Timer 20 geführt. Unterschreitet die Vorspannung der Fotodiode einen vorgegebenen Wert (M < 1,1), so wird der Timer 20 stillgesetzt und dem Regler 14a, 14b wird keine Niederfrequenz zugeführt.

Der Timer 20 besitzt einen Steuereingang 20a und kann mit Hilfe eines an den Steuereingang 20a gelegten Abschaltsignal stillgesetzt werden.

Der Impedanzwandler 8 enthält eine Kettenschaltung aus dem Hochpaß 27, 28 und dem Operationsverstärker 29. Der Operationsverstärker 29 ist über den Kondensator 27 des Hochpasses an die Kathode der Fotodiode 6 angeschlossen. Die an der Kathode der Fotodiode 6 liegende, vergleichsweise hohe Vorspannung wird daher vom Eingang des Operationsverstärkers 29 ferngehalten. Der Hochpaß enthält in einem Längszweig den Kondensator 27 und in einem darauffolgenden Querzweig den hochohmigen Widerstand 28. Der Hochpaß ist so bemessen, daß die vom Niederfrequenzgenerator 15 stammende Niederfrequenz durchgelassen wird.

Der als Emitterfolger betriebene Operationsverstärker 29 weist an seinem Eingang einen vergleichsweise hohen und an seinem Ausgang einen vergleichsweise niedrigen Widerstand auf. Der Impedanzwandler 8 stellt auf diese Weise sicher, daß die Impedanzverhältnisse an der Fotodiode 6 durch die Gleichrichteranordnung 9 praktisch nicht beeinflußt werden. An dem am Ausgang des Impedanzwandlers 8 liegenden Kondensator 30 ist die Gleichrichteranordnung 9 angeschlossen.

Die Gleichrichteranordnung 9 enthält eine Anordnung 31 zur Spitzenwertgleichrichtung, die als aktiver Doppelweggleichrichter ausgebildet ist. An die Anordnung 31 zur Spitzenwertgleichrichtung schließt sich die Anordnung 32 zur Siebung an, die als aktiver Tiefpaß eine Siebung der Niederfrequenz bewirkt. Der auf die Anordnung 32 folgende Spannungs-/Stromwandler 10 ist mit Hilfe des Operationsverstärkers 33 realisiert. Die am Ausgang des aktiven Spannungs-/Stromwandlers 10 liegende Diode 34 bewirkt eine Entkopplung und ist an den am Eingang des Logarithmierers 3 liegenden Schaltungspunkt a geführt, an dem die von der Vorrichtung 2 zur Strommessung kommende und der vom Spannungs-/Stromwandler 10 stammende Strom addiert werden.

Der Regler 14 enthält zwei Regelverstärker, die mit ihren Sollwerteingängen + am gemeinsamen Sollwertgeber 16 und über die RC-Serienschaltung 19 am Ausgang des Timers 20 liegen. Die Istwerteingänge - der Regelverstärker 14a und 14b liegen gemeinsam am Ausgang des Spitzenwertgleichrichters 13. Der Regelverstärker 14a dient zur Regelung der Vorspannung der Fotodiode 6. Der Regelverstärker 14b steuert die Verstärkung des Hochfrequenzverstärkers 7. Die dabei erzeugte Stellspannung ist zusätzlich zum Steuereingang des Hochfrequenzverstärkers 7 auch über den Spannungs-/Stromwandler 37 an den Ausgang des Logarithmierers 3 geführt. Die Regelung der Vorspannung der Fotodiode 6 und der Verstärkung des Verstärkers 7 erfolgt in der Weise, daß bei kleinen Lichtleistungen zunächst die Vorspannung und bei steigender Lichtleistung (M < 1,1) die HF-Verstärkung des Verstärkers 7 geregelt wird. Im letzteren Fall ist der Niederfrequenzgenerator 15 abgeschaltet.

Am Schaltpunkt b werden der Ausgangsstrom des Logarithmierers 3, der Ausgangsstrom des Spannungs-/Stromwandlers 38 und der Ausgangsstrom der Konstantstromquelle 35 addiert.

Bei kleinen Lichtleistungen - insbesondere bei einem Vervielfachungsfaktor M > 1,1 - wird die Lichtleistung mit Hilfe der Schaltmittel 8, 9 und 10 gemessen. In diesem Bereich der empfangenen Lichtleistung kann der durch die Fotodiode 6 fließende Strom selbst am Eingang des Logarithmierers 3 vernachlässigt werden. Der von der Konstantstromquelle 35 an den Schaltungspunkt b gelieferte Strom hat gegenüber dem Ausgangsstrom des Logarithmierers 3 die entgegengesetzte Polarität, so daß vom Ausgangsstrom des Logarithmierers 3 ein konstanter Betrag subtrahiert wird. Dadurch ist es möglich, daß der Eingangsstrom des Logarithmierers

5

3 so gewählt werden kann, daß er wesentlich größer ist als der Fotostrom, d. h. daß der am Schaltungspunkt a an sich addierte Fotostrom jedoch ohne Einfluß bleibt.

Da mit Hilfe der Schaltmittel 8, 9 und 10 die Steigung der Kennlinie ermittelt wird, kann die Lichtleistungsanzeige auch noch bei kleineren Werten als der minimalen Empfindlichkeit des Systems verwertet werden. Insbesondere kann der Zustand "kein Licht" angezeigt werden.

An den beschriebenen unteren Strombereich schließt sich ein mittlerer Strombereich an, in dem der Messung die dem Hochfrequenzverstärker 7 zugeführte Stellspannung zugrundegelegt wird. Diese Stellspannung ist am Schaltungspunkt b praktisch ausschließlich wirksam, da in diesem Meßbereich (M<1,1) die Konstantstromquelle 35 und der Niederfrequenzgenerator 15 abgeschaltet ist.

In einem oberen Meßbereich der Lichtleistung ist der vom Spannungs-/Stromwandler 37 an den Schaltungspunkt b angegebene Strom konstant, da beim Hochfrequenzverstärker 7 die Grenze des Regelbereichs erreicht ist. Wirksam ist daher nur der dem Logarithmierer 3 zugeführte Diodenstrom $I_D$. Wird die Grenze des Regelbereiches des Hochfrequenzverstärkers 7 erreicht, so steigt die Ausgangsspannung $U_A$ am Ausgang M mit wachsender empfangener Lichtleistung weiter an, da sich am Schaltungspunkt b nun der Anstieg der Ausgangsspannung des Logarithmierers 3 entsprechend auswirkt.

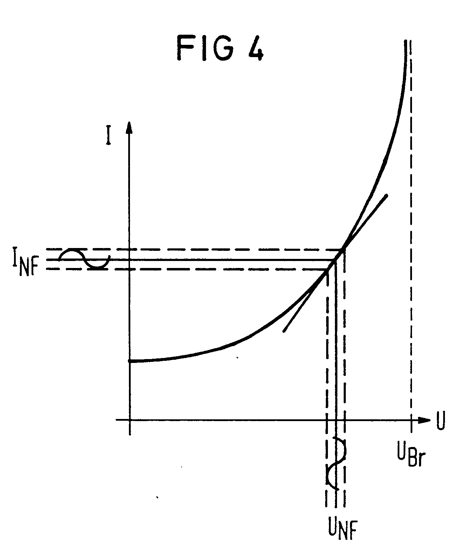

Figur 4 zeigt den typischen Verlauf der Kennlinie einer APD. Die Kennlinie der APD unterliegt relativ großen Exemplarstreuungen. Die Kennlinie verschiebt sich dabei je nach der Spannung $U_{Br}$ parallel in Richtung der Spannungsachse. Diese Abweichung kann mehrere Volt betragen. Da der Verlauf der Kennlinie erhalten bleibt und nur die Lage in Richtung der Spannungsachse verschieden ist, ist das Meßergebnis, dem die Steigung der Kennlinie zugrunde liegt, in vorteilhafter Weise vom genannten Versatz der Kennlinie unabhängig.

**Patentansprüche**

1.  Schaltungsanordnung zur Ermittlung der von einer Fotodiode (6) eines optischen Empfängers empfangenen Lichtleistung, wobei die Vorspannung der Fotodiode mittels einer Regelvorrichtung (1) in Abhängigkeit von der empfangenen Lichtleistung geregelt wird, die Schaltungsanordnung eine Modulationseinrichtung enthält, mit deren Hilfe dem Fotostrom der Fotodiode (6) ein niederfrequenter Strom konstanter Amplitude überlagert wird und an die Fotodiode (6) eine Gleichrichteranordnung (9) angeschlossen ist, die die aus dem überlagerten niederfrequenten Strom resultierende niederfrequente Spannung gleichrichtet und deren Ausgang an einen Meßausgang (M) zum Anschluß einer Anzeigevorrichtung geführt ist.

2.  Schaltungsanordnung nach Anspruch 1,
    **dadurch gekennzeichnet**,
    daß zwischen der Gleichrichteranordnung (9) und dem Meßausgang (M) ein Logarithmierer (3) angeordnet ist.

3.  Schaltungsanordnung nach Anspruch 1,
    **dadurch gekennzeichnet**,
    daß der Fotostrom der Fotodiode (6) über einen Stromaddierer geführt ist, der an einen Niederfrequenzgenerator angeschlossen ist.

4.  Schaltungsanordnung nach Anspruch 1 oder 2,
    **dadurch gekennzeichnet**,
    daß die Schaltungsanordnung eine Regelvorrichtung enthält, die den Fotostrom der Fotodiode (6) konstant hält und daß dem dem Sollwerteingang der Regelvorrichtung (14) zugeführten Sollwert einen niederfrequente Spannung zugeführt ist, deren Frequenz kleiner als die Grenzfrequenz des geschlossenen Regelkreises ist.

5.  Schaltungsanordnung nach Anspruch 1,
    **dadurch gekennzeichnet**,
    daß die Fotodiode (6) durch eine Lawinen-Fotodiode gebildet ist und daß die Modulationseinrichtung einer Regelvorrichtung zur Einstellung des jeweils optimalen Multiplikationsfaktors angehört.

6.  Schaltungsanordnung nach einem der Ansprüche 1 bis 4,
    **dadurch gekennzeichnet**,
    daß die Fotodiode (6) durch eine Lawinen-Fotodiode gebildet ist und daß eine Abschaltevorrichtung (Vergleicher 12) zur Abschaltung der Modulation des Diodenstromes bei Unterschreiten eines vorgegebenen Wertes des Multiplikationsfaktors der Lawinen-Fotodiode vorgesehen ist.

7. Schaltungsanordnung nach einem der Ansprüche 1 bis 6,
**dadurch gekennzeichnet,**
daß die Gleichrichteranordnung (9) durch einen Synchrongleichrichter gebildet ist, der an die Fotodiode (6) und an den NF-Generator (5, 15) angeschlossen ist.

8. Schaltungsanordnung nach einem der Ansprüche 2 bis 7,
**dadurch gekennzeichnet,**
daß für einen mittleren Bereich der zu ermittelnden Lichtleistung eine Vorrichtung zur Messung der an einem Stellglied des optischen Empfängers zugeführten Stellgröße vorgesehen ist.

9. Schaltungsanordnung nach einem der Ansprüche 1 bis 8,
**dadurch gekennzeichnet,**
daß in Serie zur Fotodiode (6) eine Vorrichtung zur Strommessung angeordnet ist, die an den Logarithmierer (3) einen eingeprägten Strom abgibt, und daß zwischen der Gleichrichteranordnung (9) und dem Logarithmierer ein Spannungs-/Stromwandler (10) angeordnet ist.

10. Schaltungsanordnung nach einem der Ansprüche 1 bis 9,
**dadurch gekennzeichnet,**
daß zwischen der Fotodiode (6) und der Gleichrichtervorrichtung (9) ein Impedanzwandler (8) angeordnet ist.

## Claims

1. Circuit arrangement for determining the light power received by a photodiode (6) of an optical receiver, the bias voltage of the photodiode being controlled by means of a control device (1) as a function of the received light power, the circuit arrangement containing a modulation device with the help of which a low-frequency current of constant amplitude is superimposed on the photocurrent of the photodiode (6), and a rectifier arrangement (9) which rectifies the low-frequency voltage resulting from the superimposed low-frequency current being connected to the photodiode (6), the output of the said rectifier being led to a measurement output (M) for the connection of an indicating device.

2. Circuit arrangement according to Claim 1, characterized in that a logarithmic module (3) is arranged between the rectifier arrangement (9) and the measurement output (M).

3. Circuit arrangement according to Claim 1, characterized in that the photocurrent of the photodiode (6) is led via a current adder which is connected to a low-frequency generator.

4. Circuit arrangement according to Claim 1 or 2, characterized in that the circuit arrangement contains a control device which holds the photocurrent of the photodiode (6) constant, and in that a low-frequency voltage, of which the frequency is lower than the critical frequency of the closed control loop, is fed to the desired value fed to the desired value input of the control device (14).

5. Circuit arrangement according to Claim 1, characterized in that the photodiode (6) is formed by an avalanche photodiode, and in that the modulation device belongs to a control device for adjusting the respective optimal multiplication factor.

6. Circuit arrangement according to one of Claims 1 to 4, characterized in that the photodiode (6) is formed by an avalanche photodiode, and in that a switch-off device (comparator 12) is provided for switching off the modulation of the diode current when the multiplication factor of the avalanche photodiode undershoots a prescribed value.

7. Circuit arrangement according to one of Claims 1 to 6, characterized in that the rectifier arrangement (9) is formed by a synchronous rectifier which is connected to the photodiode (6) and to the low-frequency generator (5, 15).

8. Circuit arrangement according to one of Claims 2 to 7, characterized in that, for a middle range of the light power to be determined, a device is provided for measuring the manipulated variable fed to a final controlling element of the optical receiver.

9. Circuit arrangement according to one of Claims 1 to 8, characterized in that a current-measuring device, which delivers an impressed voltage to the logarithmic module (3), is arranged in series with the photodiode (6), and in that a voltage-to-current converter (10) is arranged between the rectifier arrangement (9) and the logarithmic module.

10. Circuit arrangement according to one of Claims 1 to 9, characterized in that an impedence converter (8) is arranged between the photodiode (6) and the rectifier arrangement (9).


## Revendications

1. Montage pour déterminer la puissance lumineuse reçue par une photodiode (6) d'un récepteur optique, dans lequel la tension de polarisation de la photodiode est réglée au moyen d'un dispositif de régulation (1) en fonction de la puissance lumineuse reçue, le montage comportant un dispositif de modulation, à l'aide duquel un courant à basse fréquence, possédant une amplitude constante, est superposé au courant photoélectrique de la photodiode (6), et à la photodiode (6) est raccordé un dispositif redresseur (9), qui redresse la tension à basse fréquence, qui résulte du courant à basse fréquence superposé et dont la sortie est raccordée à une sortie de mesure (M) pour le raccordement d'un dispositif d'affichage.

2. Montage suivant la revendication 1, caractérisé par le fait qu'une unité de mise sous forme logarithmique (3) est prévue entre le dispositif redresseur (9) et la sortie de mesure (M).

3. Montage suivant la revendication 1, caractérisé par le fait que le courant photoélectrique de la photodiode (6) est transmis par l'intermédiaire d'un additionneur de courant qui est raccordé à un générateur à basse fréquence.

4. Montage suivant la revendication 1 ou 2, caractérisé par le fait que le montage comporte un dispositif de régulation qui maintient constant le courant photoélectrique de la photodiode (6) et qu'à la valeur de consigne, envoyée à l'entrée de la valeur de consigne du dispositif de régulation (14), est additionnée une tension à basse fréquence, dont la fréquence est inférieure à la fréquence limite du circuit de régulation fermé.

5. Montage suivant la revendication 1, caractérisé par le fait que la photodiode (6) est formée par une photodiode à avalanche et que le dispositif de modulation fait partie d'un dispositif de régulation servant à régler le facteur multiplicatif respectivement optimum.

6. Montage suivant l'une des revendications 1 à 4, caractérisé par le fait que la photodiode (6) est formée par une photodiode à avalanche et qu'il est prévu un dispositif d'interruption (comparateur 12) servant à interrompre la modulation du courant de la diode lorsque le facteur multiplicatif de la photodiode à avalanche tombe au-dessous d'une valeur prédéterminée.

7. Montage suivant l'une des revendications 1 à 6, caractérisé par le fait que le dispositif redresseur (9) est formé par un redresseur synchrone, qui est raccordé à la photodiode (6) et au générateur à basse fréquence (5,15).

8. Montage suivant l'une des revendications 2 à 7, caractérisé par le fait que pour une gamme moyenne de la puissance lumineuse pouvant être déterminée, il est prévu un dispositif servant à mesurer la grandeur de réglage envoyée à un circuit de réglage du récepteur optique.

9. Montage suivant l'une des revendications 1 à 8, caractérisé par le fait qu'en série avec la photodiode (6) est prévu un dispositif de mesure du courant qui envoie un courant injecté à l'unité de mise sous forme logarithmique (3), et qu'un convertisseur tension/courant (10) est disposé entre le dispositif redresseur (9) et l'unité de mise sous forme logarithmique.

10. Montage suivant l'une des revendications 1 à 9, caractérisé par le fait qu'un convertisseur d'impédance (8) est disposé entre la photodiode (6) et le dispositif redresseur (9).

FIG 1

FIG 2

FIG3

EP 0 360 877 B1

FIG 4